# EUROPEAN PATENT SPECIFICATION

(11) **EP 1 106 416 B1**
(45) Date of publication and mention of the grant of the patent: **14.04.2004**
(21) Application number: 00204338.8
(22) Date of filing: 05.12.2000
(51) Int. Cl.: B60K 26/02, B60T 7/06

(54) **A control pedal unit**
Fahrpedaleinrichtung
Ensemble pédale de commande

(30) Priority: 06.12.1999 US 455265
(43) Date of publication of application: 13.06.2001
(73) Proprietor: VOLVO CAR CORPORATION, 405 08 Göteborg (SE)
(72) Inventor: Mendis, Kolita, Newbury Park, CA 91320 (US)
(74) Representative: Hammond, Andrew David

(56) References cited:
- SU-A- 1 382 696
- US-A- 4 888 997
- US-A- 5 115 162
- US-A- 5 309 361

## Description

### TECHNICAL FIELD OF INVENTION

The invention relates to a control pedal unit for a vehicle, such as an accelerator-, brake- or clutch pedal. In particular the invention relates to a control pedal unit where the need for a separate return means, such as a return spring, for returning the pedal to its unloaded state, is eliminated. More particularly the invention relates to a control pedal unit for a vehicle, which decreases the risk of feet injury in the case of an accident. The invention furthermore relates to a support structure for the purpose of housing at least two control pedal units and a vehicle including a control pedal unit.

### BACKGROUND ART

A conventional brake system includes a pivotally hinged lever constituting a pedal. The lever is attached to a push rod, which actuates a piston housed in a master cylinder. The piston is biased by a master cylinder return spring. The master cylinder return spring returns the pedal to its state of rest when a driver releases the pressure on the pedal. Such a system is described in "Vehicle and engine technology", Heinz Heisler pages 235 and 259.

EP 322 785 relates to an accelerator pedal unit for automotive vehicles incorporating electronic engine management systems, where a pedal position sensor determines the degree of depression of the accelerator pedal. The accelerator pedal unit furthermore includes a return spring to return the pedal to a rest position when released after being depressed by a driver. The object of the invention is to provide, as a safety measure, means whereby the vehicle automatically breaks down if the return spring breaks.

US 4009623 relates to a foot lever construction having controlled flexibility. The flexibility is provided for reducing the negative effect when over-exert forces are applied to the lever due to excitement of the driver under racing conditions.

EP 830 989 relates to a foot pedal linkage where a push rod connected to the pedal arm is provided with a breaking device for, in the event of an accident, releasing the connection between the push rod and the pedal arm. This countermeasure prevents the push rod from, in the case of an accident, pushing the pedal arm further into the compartment, and thereby reduces the risk of feet injury for the driver.

In DE 43 40 633 a link mechanism retracts the pedals in the case of an accident. This countermeasure reduces the risk of feet injury for the driver, when, in the case of an accident, the driver is forced in the forward direction of the vehicle.

These and a number of other prior art references are all making use of traditional control pedals where a pedal is arranged as a rigid link arm is pivotally attached at a support structure for the pedal. The pedal is returned to its rest position by return springs that act on the lever. The return spring either acts directly or indirectly on the lever. The use of such systems are particularly vulnerable when a position sensor is used for determining wanted acceleration if the spring breaks as indicated in EP 322 785.

Furthermore, by arranging a control pedal unit as a pedal arranged on a lever that protrude into the compartment of the vehicle, the risk of feet injury is increased for several reasons. If a traditional linkage including push rods is used the pedals might, in the case of an accident, be forced into the compartment with considerable force, thereby resulting in a foot injury of the driver. If a device according to EP 830 989 is used, this risk might be reduced or eliminated, but feet injuries could still occur if a foot of a driver is twisted against the pedal when the driver is forced in the forward direction of the vehicle. A possible result of that the driver is forced in the forward direction while the foot remains on the pedal is that the foot is twisted either backwards or sideways or in both directions. The reason for this twisting is that the pedal does not give adequate support for the foot and that the pedal is protruding into the compartment. Thus there is a possibility that a part of a foot, in the case of an accident, remains on the pedal, while another part is forced forwards without any support.

US-A-4 888 997 describes a control input device for use to control a power brake system on a motor vehicle. When activated, the device will emit an electrical output system which will be a function of a load on or a deflection of the brake pedal. The control input device includes a leaf spring, which can be bowed by the pressure exerted by the vehicle operator's foot, and at least one sensor positioned to measure the bowing of the leaf spring, and then transmit an electrical output signal having a value that is representative of the amount of bowing occuring in the leaf spring. As with conventional pedal arrangements, the brake pedal of US-A-4 888 997 is substantially rigid.

US-A-5 309 361 describes in one embodiment a pedal assembly comprising as a housing an elastic cap corresponding to a segment of a rubber ball. The elastic cap yields elastically when exposed to external forces. The interior of the cap is filled at least partly by a block of elastically conductive rubber with two electrodes projecting into the rubber block. Forces exerted on the outer surface of the elastic cap results in a change in the electrical behaviour of the rubber. Since the pedal assembly of US-A-5 309 361 is in the form of a cap, it does not resemble a conventional pedal.

SU-A-1 382 696 would seem to disclose a pedal assembly in the form of a resilient bubble. Depression of the bubble causes it to flex and to expand outwardly as it is compressed. As such, sufficient space around the pedal assembly must exist to allow for such outward expansion.

### SUMMARY OF THE INVENTION

The problems indicated above are solved by providing a control pedal unit according to claim 1. By providing a control pedal unit where the pedal is formed as a resilient body it is possible to create a pedal unit where the need for a separate return spring is eliminated. The safety is also increased since the dimensions and stability of the pedal eliminates the risk of spring breakage. If an accident should occur when a driver can be forced towards the pedal arrangement the resiliency of the pedal can function as a deceleration unit which decelerates the feet and lower leg portion of the driver under controlled conditions. By providing a control pedal unit which includes a support structure which includes a lower support member and an upper support member, it is possible to create a pedal that gives a drivers foot full support from the heel to the toes. Furthermore such a construction makes it possible to construct a pedal arrangement where protrusions into the compartment by the pedal arrangement is eliminated. Instead the pedal arrangement will define a continuous curved surface. Such a construction reduces the risk of twisting of the feet in case of an accident.

By providing a control pedal unit where the resilient body is pivotally attached to a support structure as suggested in claims 2 and 3, it is possible to create a pedal with sufficient resiliency while having a reduced total length of the pedal, which is advantageous due to the lack of space in the feet region of a vehicle.

By providing a control pedal unit where the resilient body is rigidly attached at the support unit as suggested in claims 4 and 5, it is possible to create a resilient pedal which might be given an appearance that reminds of a traditional pedal, while it still will have the benefit of being resilient which, in the case of an accident, will reduce the risk for feet injury.

By providing a curved resilient body having at least one bulge facing in the direction of a driver when mounted in a vehicle, as suggested in claim 6, it is possible to create a pedal unit which has an adequate flexure under load.

By providing a symmetrical flexible link as suggested in claim 7 it is possible to create a pedal unit where the bulge of the resilient body performs a linear displacement perpendicular to a plane including the points where the flexible body is attached to the support structure.

By making the resilient body with one bulge as suggested in claim 8, one obtains the advantages of symmetry while maintaining a simple and appealing structure.

By making the flexible link where the flexure of the link increases with increasing load, as claimed in claim 9, a stable structure is created where a driver is not surprised by the behaviour of the pedal.

The arrangement as claimed in claims 6 to 9 provides for an ergonomic pedal function for a driver.

The use of a resilient body for making a pedal structure is particularly suited when using a strain gage, as claimed in claim 10, as means for measuring or indicating the pedal position. If a normal pedal arrangement is used, the pedal position cannot be directly indicated by a strain gauge. Instead the pedal must be arranged to bend a separate body, which degree of flexure can be measured by a strain gauge. The use of the resilient body together with a strain gauge renders possible a simple, reliable pedal structure, including the benefits of the resiliency in a crash situation.

Other advantageous embodiments of the means responsive to the flexure of the pedal are claimed in claims 11 to 15.

By providing a support structure for the purpose of housing at least two control pedal units as claimed in claim 16 a functional unit including the benefits of the use of a flexible body as a pedal is created.

By positioning the at least two pedals so that a continuous surface is created, as claimed in claim 17, the risk for sideways twist of the feet of a driver is reduced in case of an accident.

By providing means for preventing access underneath the continuous surface when a pedal is depressed, as claimed in claims 18 to 20, the behaviour in an accident situation is further improved.

A structure according to claims 21 and 22 provides for a pedal structure which easily could be adapted to drivers of different length, thereby reducing the need for a short driver to be positioned in an excessively low position, which could be detrimental to sight conditions for a short driver.

Claims 23 and 24 relates to a vehicle incorporating a pedal unit provided with a pedal formed as a resilient body and a vehicle including a support structure including such a pedal.

### BRIEF DESCRIPTION OF THE DRAWINGS

The invention will be described in greater detail below, with references to the appended drawings, in which:
Fig. 1 is a side view of a control pedal unit,
Fig. 2 is a perspective view of a pedal cluster including three pedal units,
Fig. 3 is a perspective view of a support structure including three pedal units, where the support structure is mounted in a frame,
Fig. 4 is a side view of a pedal including a side wall for preventing access to the region underneath a neighbouring pedal when depressed by a driver,
Figs. 5a - 5f are side views of pedal units having different means for detection of the degree of flexure of the pedal,
Figs. 6a -6b are side views of pedal units having add on ergonomic comfort features, and
Fig. 7 is a side view of a pedal unit mounted in a frame having means for adjusting the position of said pedal.

### PREFERRED EMBODIMENTS

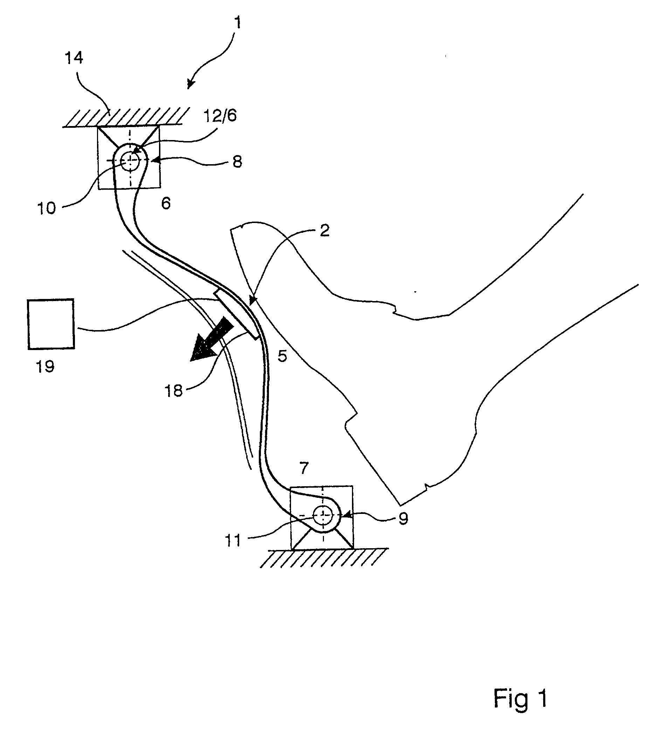

Fig. 1 shows a side view of a control pedal unit for a vehicle comprising a support structure 1, a pedal 2 connected to said support structure 1 and means 3 responsive to the movement of the pedal 2 for generating a signal corresponding to the position and/or change of position of the pedal.

The pedal 2 is formed as a resilient body. The body is essentially a shaped resilient surface having a width dimension and a length dimension which are considerably larger than the thickness of the body. As shown in the side view, the surface is curved and has a mid portion 5, and a first end portion 6 and a second end portion 7. Means 8, 9 for securing the surface to the support structure 1 are provided at the first 6 and second 7 end portions. In a preferred embodiment said means are constituted by a pin 10, 11 that protrudes through a hole at said first 6 and second 7 end portions of the surface. Thereby the surface is pivotally arranged at both end portions, thereby giving the surface reduced resistance to bending while maintaining the thickness of the surface.

Due to the fact that the surface is curved it possesses a bulge or a number of bulges. The surface in Fig. 1 has one bulge facing the direction of a driver, when mounted in a vehicle. The bulge is essentially distributed over the mid portion 5 of the surface. By placing the bulge centrally between said means for securing 8, 9 the surface and making the surface symmetrical the mid portion 5 of the pedal surface will undergo a linear motion transverse to a plane passing through the securing means 8, 9.

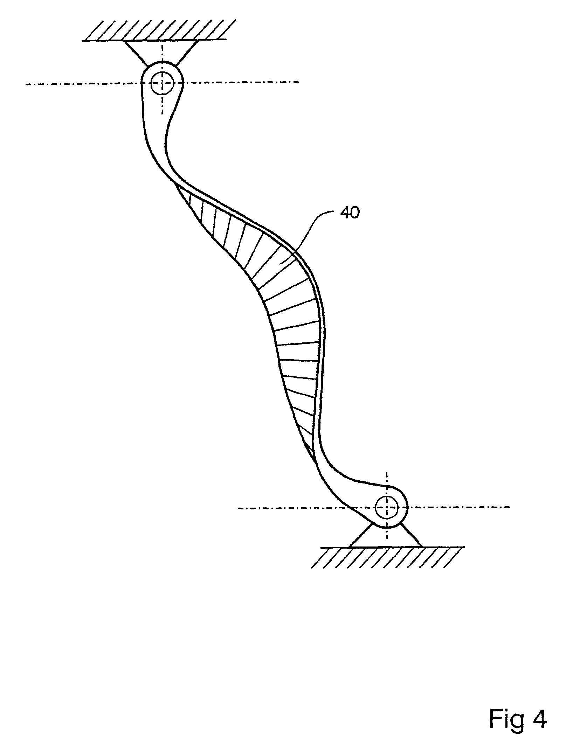

From a top view over the surface, see Fig. 4, the surface has a rectangular shape. A preferable width is preferably ranging from 12 - 16-cm. The length, size and shape of the surface is adapted for positioning said bulge situated in the mid portion of the surface in a comfortable position beneath the sole of a driver with normal sized shoes, when held in a correct position. The length is also adapted for giving the surface the correct resiliency. The length of the surface is preferably ranging from 25 - 45 cm.

The thickness of the surface is adapted to give the surface an adequate resiliency, while making the surface sufficient sturdy to endure repetitive flexing under the life span of the vehicle. The thickness of the surface is preferably ranging from 1 - 5 mm. The pedal surface may have corrugations to increase the flexibility.

The surface is preferable made of a plastic material which might be reinforced by fibres.
The material should have sufficient fatigue strength to withstand repeated pedal applications during its intended lifetime. Typical materials would be acetal polymers with Young's moduli in the range of 1 GPa to 7 GPa.

In the end portions of the surface bores 12, 13 are provided for housing pivots 10, 11. The surface might be reinforced in the region of said bores, either by the inclusion of reinforcement fibres or by making the surface thicker in this area.

The surface is supported by the support structure 1 The support structure includes an upper support member 4 and a lower support member 5. The upper and lower support structures 4, 5 each houses retaining means 14, 15 adapted to carry respective pivots 10, 11. The retaining means 14, 15 are formed as flanges including bores 16, 17. When mounting the surface to the support structure the surface is positioned in the support structure with the bores of the surface aligning the bores of the flanges. The pivots 10, 11are then inserted through said bores and secured to the flanges 16, 17. The pivots can be secured in any conventional way, for instance by forming the pivots as bolts, which are secured by a nut when mounted in a bracket formed by the flanges 14, 15.

In an alternative embodiment the surface is shaped with snap locks in the end regions. Providing a bore, which is partly open, along the length of the bore, makes such a snap lock.

The width of the opening is less than the diameter of the pivot. The surface can be forced on the pivot.

The surface is furthermore provided with means 3 responsive to the movement of the pedal 2 for generating a signal corresponding to the position and/or change of position of the pedal.
In Fig. 1 said means includes a strain gauge 18 that is mounted on the surface. The strain gauge 18 generates a signal that is dependent on the amount of flexure of the pedal. The signal is processed by a processor 19 which controls a chosen function of the vehicle such as the brake system, the required power output of the engine or any other system controllable through a pedal.

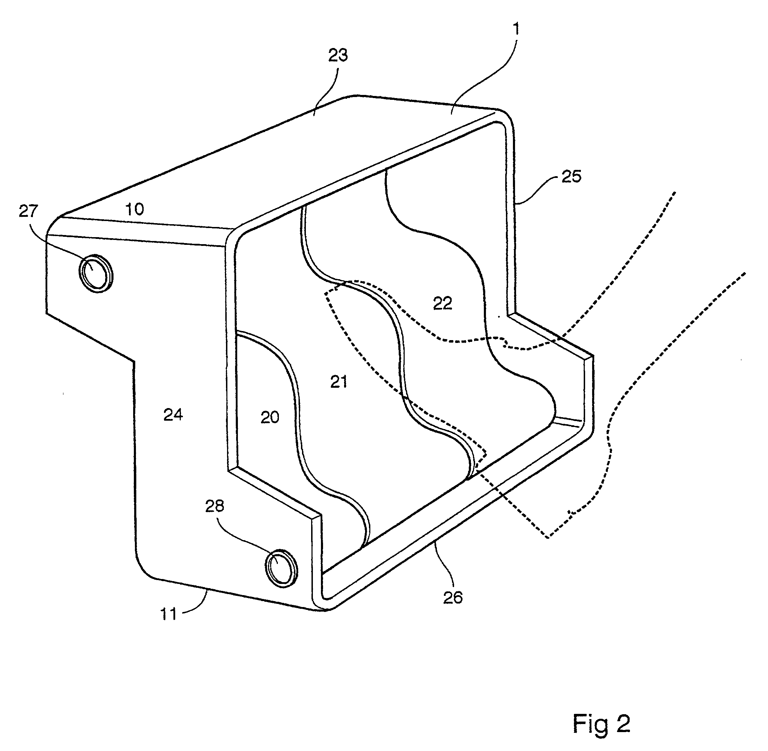

The support structure is preferable made as a support frame as shown in Fig. 2. Fig. 2 further indicates a cluster of three pedals 20, 21, 22. The pedals are intended to function as an accelerator pedal, a brake pedal and a clutch pedal. The cluster of pedals is housed in a support structure 1 shaped as a support frame. The support frame 1 includes a top wall 23, two side walls 24, 25 and a bottom wall 26. Said walls are connected together forming a closed box shaped structure. If extra rigidity is required, a back wall could be added leaving only a front opening of the box shaped structure. Two pivots 10, 11 are arranged and secured to the side walls 24, 25. The pivots carry said three pedals 20, 21, 22. The pivots together with the box shaped structure create a very rigid frame that protects the feet in case of a side collision. The box, when mounted in a vehicle, could be connected to the frame structure at both sides of the vehicle via a stiff structure, thereby increasing the side impact protection of the vehicle.

A first pivot 10 is arranged in the upper part of the support structure 1 forming the upper support member 4 and a second pivot is arranged in the lower part of the support structure forming the lower support member 5. The first pivot 10 is arranged in a back portion 27 of the support structure 1 and the second pivot 11 is arranged in a front portion 28 of the support structure 1. This arrangement provides for an inclination of the pedal in relation to the box shaped support structure 1. When mounted in a vehicle, the fixation of the box shaped support structure 1 and the inclination of the pedal within the support structure is chosen so that an inclination angle α in relation to a horizontal plane in the vehicle is preferably in the range of 15°-60°.

As shown in the drawing, the three pedals together form a surface without large gaps and any protruding elements as a traditional set of pedals would do. In an alternative embodiment a separating member can separate neighbouring pedal units. In that case the pedal units together with the separating member create a surface without any large gaps. The separating member can be made in the same fashion as the resilient body of a pedal unit with the only difference that the separating member is not provided with any means for generating a signal in dependence of the flexure of the separating member. In preferred embodiments the separating member has a similar or the same curvature as the pedals.

In a preferred embodiment the separating member is formed with a resistance to flexure that is greater than the resistance to flexure of the neighbouring pedals. This reduces the risk for a driver to push the separating member instead of a pedal by mistake. If the separating member is provided with an enforcing structure that deforms under the load that would occur under a collision, a structure which prevents the driver from erroneously pushing the separating member while still having the benefits of resiliency would be created.

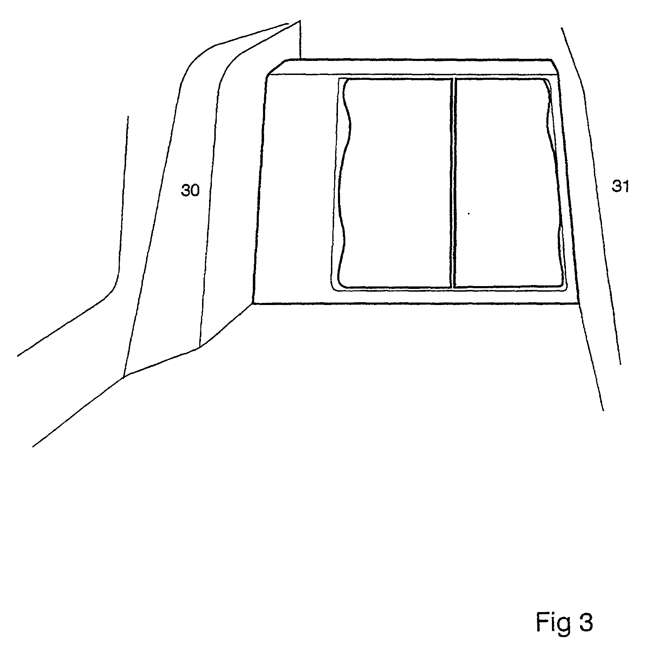

Fig 3 shows a perspective view of a pedal frame together with two pedals mounted in a vehicle. The width of the pedal frame is so chosen that the pedal frame fills the complete space between an outer wall 30 of the vehicle and the tunnel 31 separating the driver's foot compartment from a passenger's foot compartment. This increases the rigidity of the vehicle and thereby the side impact safety, and eliminates gaps large enough for feet to slide into.

Fig. 4 shows a side view of a pedal surface having a side portion 40 for preventing access underneath a pedal when a neighbouring pedal is depressed. The side portion can be made of elastomeric or foam material that is attached to the backside of the surface. It can also be constituted by an open comb filler. If a separating member is used means for preventing access under the pedals are preferably provided on the separating member.

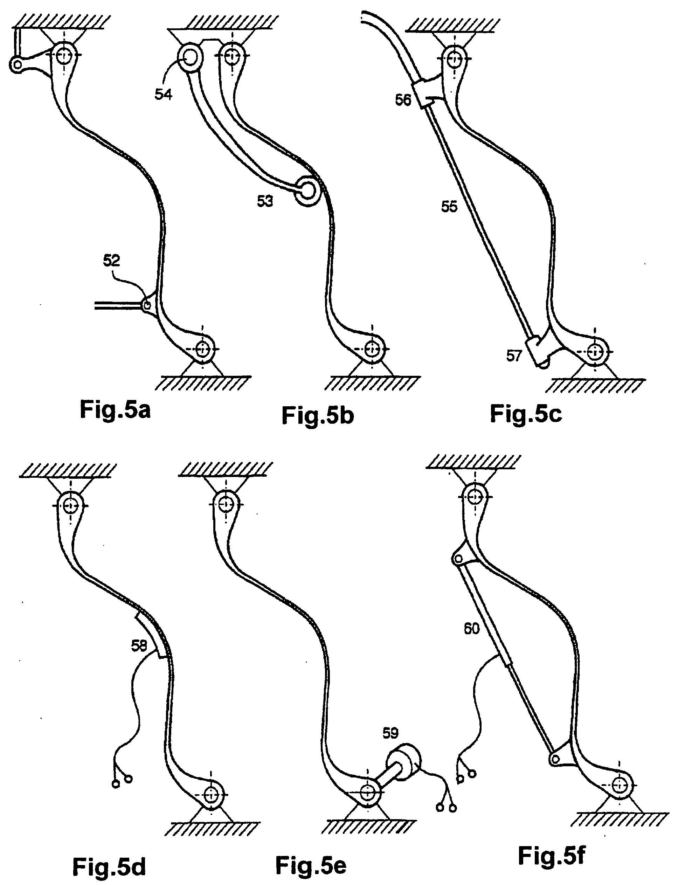

Figs. 5 a-f show different embodiments of means for generating a signal corresponding to the degree of flexure of the pedal. Fig. 5a shows a linkage 51 that is connected to the resilient surface. When the surface is actuated the link will follow the movement of the point 52 of the surface where the link 51 is attached to the surface. Fig. 5b shows a cam 53 that is mounted for following the movement of the surface. The motion of the cam can be measured by a rotational sensor 54. The cam may constitute a conventional brake, clutch or accelerator lever arm, in which case the resilient pedal surface serves as a protective cover over a conventional pedal assembly. Fig. 5c shows a cable 55 which is attached at an upper portion 56 of the surface and a lower portion 57 of the surface. When the surface is actuated, the distance between the points of connection of the cable is changed. Thereby the cable can function as means for generating a signal that corresponds to the degree of flexure of the surface. Fig. 5d shows a strain gauge 58 attached to the surface. When the surface flexes, a signal is generated that corresponds to the degree of flexure of the surface. Fig. 5e shows a rotary sensor 59 attached in the vicinity of a pivot of the resilient surface. When the surface is actuated, the portion around the pivot will rotate, whereby the rotary sensor will function as means for generating a signal that corresponds to the degree of flexure of the surface. Fig. 5f shows a linear sensor 60 that is attached and functions in the same manner as the cable as shown in Fig. 5c.

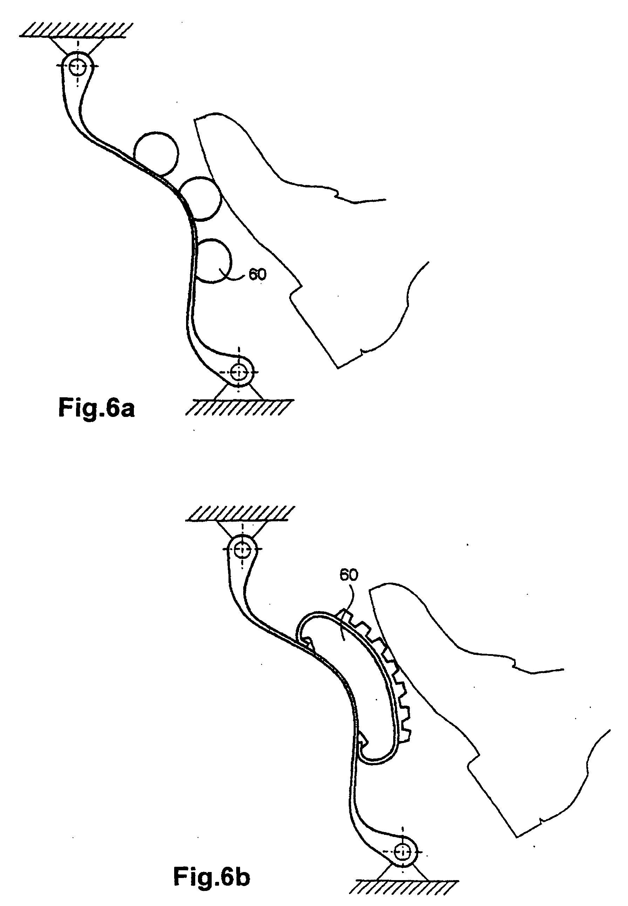

In Fig. 6 a pedal surface is shown, which carries two variants of ergonomic add on comfort features 60.

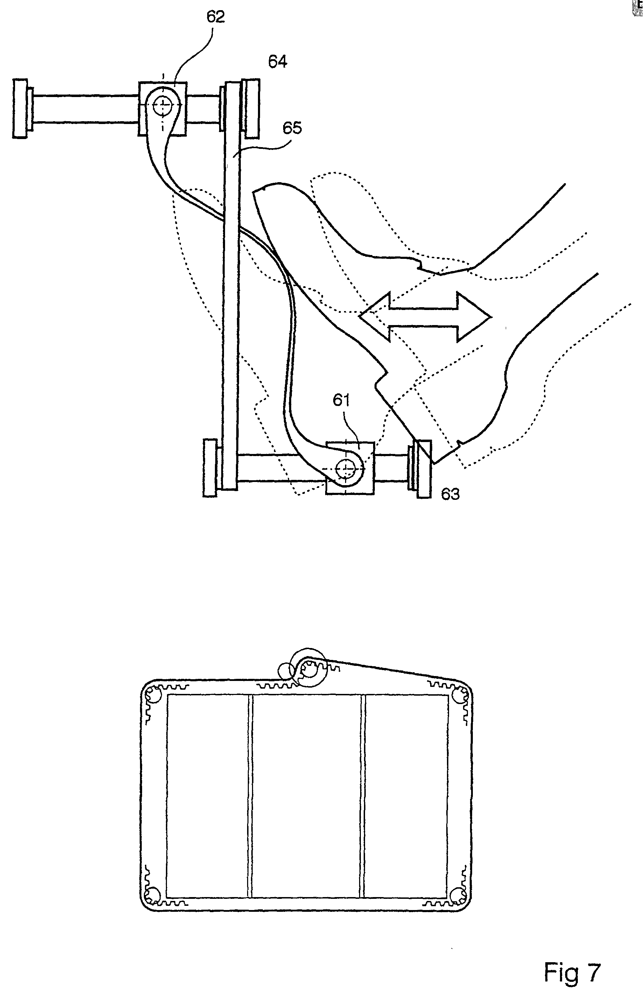

As shown in Fig. 7, it is possible to arrange the pedal units movable within a frame so that the position of the pedal can be adapted to the height of the driver. This can be accomplished by mounting the upper and lower members 61, 62 of the support structure to worm screws 63 and 64. The two screws can be driven individually or by a belt 65,which in turn is rotated manually or by a motor. The belt gives the two screws equal rotational velocity, thereby making is possible to move the pedal along the axis of said screws. The entire frame could also be rotated about a revolute joint positioned above the frame, thus adjusting pedal proximity to the driver.

The invention is not limited to the above-mentioned embodiment, but may be varied within the scope of the claims. Other material than plastic could create the resilient member, for instance in spring steel or it could be made of segments containing rigid and resilient material in combination. All the embodiments of the invention could be provided with a compliant travel stop, which may be incorporated under the flexible element to withstand high pedal loads that are beyond the load bearing capacity of the flexible element alone.

## Claims

1. A control pedal unit for a vehicle comprising:
a support structure (1) having an upper support member (4) and a lower support member (5), said upper support member and said lower support member defining a gap therebetween, a pedal being formed as a resilient body arranged to flex under load between said upper and lower support members, and means (3) responsive to the flexure of the pedal for generating a signal corresponding to the degree of flexure of the pedal, **characterised in that** ;
the pedal (2) is supported in said gap between said upper and lower support members and flexing of the pedal is constrained to take place only in said gap between said upper support member and said lower support member.

2. A control pedal unit according to claim 1, **characterised in that** the resilient body is pivotally attached at the upper support member (4).

3. A control pedal unit according to claims 1 or 2, **characterised in that** the resilient body is pivotally attached at the lower support member (5).

4. A control pedal unit according to claim 1, **characterised in that** the resilient body is rigidly attached at the upper support member (4).

5. A control pedal unit according to claim 1, 2 or 4, **characterised in that** the resilient body is rigidly attached at the lower support member (5).

6. A control pedal unit according to any of the preceding claims **characterised in that** the resilient body is curved, whereby at least one bulge is facing, when mounted in a vehicle, in the direction towards the driver.

7. A control pedal unit according to claim 6, **characterised in that** the resilient body is symmetrical with respect to said bulge.

8. A control pedal unit according to claim 6 or 7, **characterised in that** resilient body has one bulge.

9. A control pedal unit according to any of the preceding claims, **characterised in that** the flexure of the resilient body increases with increasing load.

10. A control pedal unit according to any of the preceding claims, **characterised in that** the means (3) responsive to the movement of the pedal includes a strain gauge (18) which is attached to the resilient body, whereby the corresponding degree of flexure is measured by the strain gauge.

11. A control pedal unit according to claims 2 or 3, **characterised in that** the means (3) responsive to the movement of the pedal includes a rotary sensor (54) which is attached to the resilient body, preferably in the vicinity of a pivoting connection between the resilient body and the support structure (1), whereby depression of the resilient body pivots the resilient body in the region of the pivoting connection.

12. A control pedal unit according to any of the preceding claims, **characterised in that** the means (3) responsive to the movement of the pedal includes a linear sensor (60) attached to the resilient body at two distant locations, whereby flexure of the resilient body increases the distance between said two distant locations.

13. A control pedal unit according to any of the preceding claims, **characterised in that** the means (3) responsive to the movement of the pedal includes a cable (55) attached to the resilient body at two distant locations, whereby flexure of the resilient body increases the distance between said two distant locations.

14. A control pedal unit according to any of the preceding claims, **characterised in that** the means responsive to the movement of the pedal (2) includes a cam member (53), whereby the cam member follows the flexure of the resilient body.

15. A control pedal unit according to any of the preceding claims, **characterised in that** means (3) responsive to the movement of the pedal includes a link mechanism (51) which is attached to the resilient body

16. A support structure (1) comprising and housing at least two control pedal units according to any of the preceding claims.

17. A support structure according to claim 16, **characterised in that**, the at least two pedals, when not depressed by the driver, together form a continuous surface.

18. A support structure according to claim 17, **characterised in that** each pedal is separated by a separating member having a surface, when mounted in a vehicle facing in the direction of the driver, that has the same shape as the corresponding surface of the pedals, said separating member forming a continuous surface together with the pedals when the pedals are not depressed by the driver.

19. A support structure according to claim 18, **characterised in that** the separating member has side portions (40) preventing access underneath the continuous surface when a neighbouring pedal is depressed.

20. A support structure according to claim 17, **characterised in that** at least two pedals are neighbouring each other and that each pedal neighbouring another pedal has a side portion (40) facing the neighbouring pedal, said side portion preventing access underneath the continuous surface when a neighbouring pedal is depressed.

21. A support structure according to any of claims 16- 20, **characterised in that** the support structure is mounted in a pedal frame, said pedal frame fills the space between a side structure and a tunnel wall of a vehicle thereby creating a complete surface without protrusions in the feet region of a driver.

22. A support structure according to claim 21, **characterised in that** the support structure is adjustably supported by the frame whereby the positions of the pedals can be adjusted to the length of the driver.

23. A vehicle comprising a propulsion unit, at least one control pedal unit for the propulsion unit, a brake system which is adapted to decelerate said vehicle or hold the vehicle in a stand still position and a brake control system for controlling the applied braking force on said vehicle, wherein said brake control system is connected to a brake pedal, **characterised in that** at least one of said pedals is formed as a control pedal unit according to any of the preceding claims 1- 15

24. A vehicle according to claim 23, **characterised in that** said accelerator pedal and said brake pedal are arranged in a support structure according to any of claims 16 to 22.

## Patentansprüche

1. Steuerungspedaleinrichtung für ein Fahrzeug, mit
einer Tragkonstruktion (1) mit einem oberen Lagerelement (4) und einem unteren Lagerelement (5), wobei zwischen dem oberen Lagerelement und dem unteren Lagerelement ein Spalt bestimmt ist,
einem Pedal (2), das als federnder Körper ausgebildet ist, der unter Last zwischen dem oberen und dem unteren Lagerelement biegbar ist, und
einer Einrichtung (3), die auf die Biegung des Pedals empfindlich ist, um ein Signal zu erzeugen, das dem Grad der Biegung des Pedals entspricht,
**dadurch gekennzeichnet,**
**dass** das Pedal (2) in dem Spalt zwischen dem oberen und dem unteren Lagerelement gehalten ist und die Biegung des Pedals zwangsläufig nur in dem Spalt zwischen dem oberen Lagerelement und dem unteren Lagerelement stattfindet.

2. Steuerungspedaleinrichtung nach Anspruch 1,
**dadurch gekennzeichnet,**
**dass** der federnde Körper am oberen Lagerelement (4) schwenkbar angebracht ist.

3. Steuerungspedaleinrichtung nach Anspruch 1 oder 2,
**dadurch gekennzeichnet,**
**dass** der federnde Körper am unteren Lagerelement (5) schwenkbar angebracht ist.

4. Steuerungspedaleinrichtung nach Anspruch 1,
**dadurch gekennzeichnet,**
**dass** der federnde Körper am oberen Lagerelement (4) starr angebracht ist.

5. Steuerungspedaleinrichtung nach Anspruch 1, 2 oder 4,
**dadurch gekennzeichnet,**
**dass** der federnde Körper am unteren Lagerelement (5) starr angebracht ist.

6. Steuerungspedaleinrichtung nach einem der vorhergehenden Ansprüche,
**dadurch gekennzeichnet,**
**dass** der federnde Körper gekrümmt ist, so dass mindestens eine Ausbuchtung in die Richtung zum Fahrer gewandt ist, wenn der federnde Körper in einem Fahrzeug angebracht ist.

7. Steuerungspedaleinrichtung nach Anspruch 6,
**dadurch gekennzeichnet,**
**dass** der federnde Körper in Bezug auf die Ausbuchtung symmetrisch ist.

8. Steuerungspedaleinrichtung nach Anspruch 6 oder 7,
**dadurch gekennzeichnet,**
**dass** der federnde Körper eine Ausbuchtung besitzt.

9. Steuerungspedaleinrichtung nach einem der vorhergehenden Ansprüche,
**dadurch gekennzeichnet,**
**dass** die Biegung des federnden Körpers mit zunehmender Belastung zunimmt.

10. Steuerungspedaleinrichtung nach einem der vorhergehenden Ansprüche,
**dadurch gekennzeichnet,**
**dass** die auf die Bewegung des Pedals empfindliche Einrichtung (3) einen Dehnungsmesser (18) enthält, der am federnden Körper angebracht ist, wobei der jeweilige Grad der Biegung durch den Dehnungsmesser gemessen wird.

11. Steuerungspedaleinrichtung nach Anspruch 2 oder 3,
**dadurch gekennzeichnet,**
**dass** die auf die Bewegung des Pedals empfindliche Einrichtung (3) einen Drehsensor (54) enthält, der am federnden Körper vorzugsweise in der Nähe einer schwenkbaren Verbindung zwischen dem federnden Körper und der Tragkonstruktion angebracht ist, wobei ein Niederdrücken des federnden Körpers den federnden Körper im Bereich der schwenkbaren Verbindung verschwenkt.

12. Steuerungspedaleinrichtung nach einem der vorhergehenden Ansprüche,
**dadurch gekennzeichnet,**
**dass** die auf die Bewegung des Pedals empfindliche Einrichtung (3) einen Linearsensor (60) enthält, der am federnden Körper an zwei voneinander beabstandeten Orten angebracht ist, wobei eine Biegung des federnden Körpers den Abstand zwischen den beiden voneinander beabstandeten Orten vergrößert.

13. Steuerungspedaleinrichtung nach einem der vorhergehenden Ansprüche,
**dadurch gekennzeichnet,**
**dass** die auf die Bewegung des Pedals empfindliche Einrichtung (3) ein Kabel (55) enthält, das am federnden Körper an zwei voneinander beabstandeten Orten angebracht ist, wobei eine Biegung des federnden Körpers den Abstand zwischen den beiden voneinander beabstandeten Orten vergrößert.

14. Steuerungspedaleinrichtung nach einem der vorhergehenden Ansprüche,
**dadurch gekennzeichnet,**
**dass** die auf die Bewegung des Pedals empfindliche Einrichtung ein Nockenelement (53) enthält, wobei das Nockenelement der Biegung des federnden Körpers folgt.

15. Steuerungspedaleinrichtung nach einem der vorhergehenden Ansprüche,
**dadurch gekennzeichnet,**
**dass** die auf die Bewegung des Pedals empfindliche Einrichtung (3) eine Gelenkvorrichtung (51) enthält, die am federnden Körper angebracht ist.

16. Tragkonstruktion (1), die mindestens zwei Steuerungspedaleinrichtungen gemäß einem der vorhergehenden Ansprüche aufweist und aufnimmt.

17. Tragkonstruktion nach Anspruch 16
**dadurch gekennzeichnet,**
**dass** die mindestens zwei Pedale gemeinsam eine gleichförmige Oberfläche bilden, wenn sie nicht von einem Fahrer gedrückt werden.

18. Tragkonstruktion nach Anspruch 17
**dadurch gekennzeichnet,**
**dass** jedes Pedal durch ein Trennelement getrennt ist, das eine Oberfläche besitzt, die, wenn sie in einem Fahrzeug der Richtung des Fahrers zugewandt angebracht ist, die gleiche Form besitzt wie die entsprechende Oberfläche des Pedals, wobei das Trennelement gemeinsam mit den Pedalen eine gleichförmige Oberfläche bildet, wenn die Pedale von dem Fahrer nicht gedrückt werden.

19. Tragkonstruktion nach Anspruch 18
**dadurch gekennzeichnet,**
**dass** das Trennelement Seitenabschnitte (40) besitzt, die einen Zugang unter die gleichförmige Oberfläche verhindern, wenn ein benachbartes Pedal gedrückt wird.

20. Tragkonstruktion nach Anspruch 17
**dadurch gekennzeichnet,**
**dass** mindestens zwei Pedale zueinander benachbart sind und dass jedes Pedal, das zu einem anderen Pedal benachbart ist, einen Seitenabschnitt (40) besitzt, der dem benachbarten Pedal zugewandt ist, wobei der Seitenabschnitt einen Zugang unter die gleichförmige Oberfläche verhindert, wenn ein benachbartes Pedal gedrückt wird.

21. Tragkonstruktion nach einem der Ansprüche 16 bis 20,
**dadurch gekennzeichnet,**
**dass** die Tragkonstruktion in einem Pedalrahmen angebracht ist, wobei der Pedalrahmen den Raum zwischen einem Seitenaufbau und einer Tunnelwand eines Fahrzeuges ausfüllt, wodurch eine komplette Oberfläche ohne Vorsprünge im Fußbereich eines Fahrers erzeugt wird.

22. Tragkonstruktion nach Anspruch 21
**dadurch gekennzeichnet,**
**dass** die Tragkonstruktion durch den Rahmen einstellbar gehalten ist, wodurch die Positionen der Pedale in Bezug auf die Größe des Fahrers eingestellt werden können.

23. Fahrzeug mit einer Antriebseinheit, mindestens einer Steuerungspedaleinrichtung für die Antriebseinheit, einem Bremssystem, das zum Verzögern des Fahrzeugs oder zum Festhalten des stillstehenden Fahrzeugs vorgesehen ist, und einem Bremssteuerungssystem zur Steuerung der ausgeübten Bremskraft bei dem Fahrzeug, wobei das Bremssteuerungssystem an ein Bremspedal angeschlossen ist,
**dadurch gekennzeichnet,**
**dass** mindestens eines der Pedale als Steuerungspedaleinrichtung gemäß einem der Ansprüche 1 bis 15 ausgebildet ist.

24. Fahrzeug nach Anspruch 23,
**dadurch gekennzeichnet,**
**dass** das Gaspedal und das Bremspedal in einer Tragkonstruktion gemäß einem der Ansprüche 16 bis 22 angeordnet sind.

## Revendications

1. Unité de pédale de commande d'un véhicule, comportant :
une structure de support (1) ayant un élément de support supérieur (4) et un élément de support inférieur (5), ledit élément de support supérieur et ledit élément de support inférieur définissant un espace entre eux, une pédale étant formée sous la forme d'un corps élastique agencé pour se déformer sous une charge entre lesdits éléments de support supérieur et inférieur, et des moyens (3) sensibles à la déformation de la pédale pour produire un signal correspondant au degré de déformation de la pédale, **caractérisée en ce que**
la pédale (2) est supportée dans ledit espace existant entre lesdits éléments de support supérieur et inférieur et la déformation de la pédale est contrainte d'avoir lieu uniquement dans ledit espace existant entre ledit élément de support supérieur et ledit élément de support inférieur.

2. Unité de pédale de commande selon la revendication 1, **caractérisée en ce que** le corps élastique est relié de manière pivotante à l'élément de support supérieur (4).

3. Unité de pédale de commande selon la revendication 1 ou 2, **caractérisée en ce que** le corps élastique est relié de manière pivotante à l'élément de support inférieur (5).

4. Unité de pédale de commande selon la revendication 1, **caractérisée en ce que** le corps élastique est relié de manière rigide à l'élément de support supérieur (4).

5. Unité de pédale de commande selon la revendication 1, 2 ou 4, **caractérisée en ce que** le corps élastique est relié de manière rigide à l'élément de support inférieur (5).

6. Unité de pédale de commande selon l'une quelconque des revendications précédentes, **caractérisée en ce que** le corps élastique est incurvé, de sorte qu'au moins une partie bombée est dirigée, lorsqu'elle est montée dans un véhicule, dans la direction allant vers le conducteur.

7. Unité de pédale de commande selon la revendication 6, **caractérisée en ce que** le corps élastique est symétrique par rapport à ladite partie bombée.

8. Unité de pédale de commande selon la revendication 6 ou 7, **caractérisée en ce que** le corps élastique a une partie bombée.

9. Unité de pédale de commande selon l'une quelconque des revendications précédentes, **caractérisée en ce que** la déformation du corps élastique augmente avec une charge croissante.

10. Unité de pédale de commande selon l'une quelconque des revendications précédentes, **caractérisée en ce que** les moyens (3) sensibles au déplacement de la pédale comportent un dynamomètre (18) qui est relié au corps élastique, de sorte que le degré de déformation correspondant est mesuré par le dynamomètre.

11. Unité de pédale de commande selon la revendication 2 ou 3, **caractérisée en ce que** les moyens (3) sensibles au déplacement de la pédale comportent un détecteur de rotation (54) qui est relié au corps élastique, de préférence au voisinage d'une liaison pivotante entre le corps élastique et la structure de support (1), de sorte qu'un enfoncement du corps élastique fait pivoter le corps élastique dans la zone de la liaison pivotante.

12. Unité de pédale de commande selon l'une quelconque des revendications précédentes, **caractérisée en ce que** les moyens (3) sensibles au déplacement de la pédale comportent un détecteur linéaire (60) relié au corps élastique au niveau de deux emplacements distants, de sorte que la déformation du corps élastique augmente la distance entre lesdits deux emplacements distants.

13. Unité de pédale de commande selon l'une quelconque des revendications précédentes, **caractérisée en ce que** les moyens (3) sensibles au déplacement de la pédale comportent un câble (55) relié au corps élastique au niveau de deux emplacements distants, de sorte qu'une déformation du corps élastique augmente la distance entre lesdits deux emplacements distants.

14. Unité de pédale de commande selon l'une quelconque des revendications précédentes, **caractérisée en ce que** les moyens sensibles au déplacement de la pédale (2) comportent un élément formant came (53), de sorte que l'élément formant came suit la déformation du corps élastique.

15. Unité de pédale de commande selon l'une quelconque des revendications précédentes, **caractérisée en ce que** les moyens (3) sensibles au déplacement de la pédale comportent un mécanisme à biellette (51) qui est relié au corps élastique.

16. Structure de support (1) comportant et recevant au moins deux unités de pédales de commande selon l'une quelconque des revendications précédentes.

17. Structure de support selon la revendication 16, **caractérisée en ce que** les aux moins deux pédales, lorsqu'elles ne sont pas enfoncées par le conducteur, forment ensemble une surface continue.

18. Structure de support selon la revendication 17, **caractérisée en ce que** chaque pédale est séparée par un élément de séparation ayant une surface, lorsqu'il est monté dans un véhicule en vis-à-vis de la direction du conducteur, qui a la même forme que la surface correspondante des pédales, ledit élément de séparation formant une surface continue en association avec les pédales lorsque les pédales ne sont pas enfoncées par le conducteur.

19. Structure de support selon la revendication 18, **caractérisée en ce que** l'élément de séparation a des parties latérales (40) empêchant un accès en dessous de la surface continue lorsqu'une pédale voisine est enfoncée.

20. Structure de support selon la revendication 17, **caractérisée en ce qu'**au moins deux pédales sont voisines l'une de l'autre et **en ce que** chaque pédale voisine d'une autre pédale a une partie latérale (40) dirigée vers la pédale voisine, ladite partie latérale empêchant d'avoir accès en dessous de la surface continue lorsqu'une pédale voisine est enfoncée.

21. Structure de support selon l'une quelconque des revendications 16 à 20, **caractérisée en ce que** la structure de support est montée dans un châssis de pédale, ledit châssis de pédale remplit l'espace existant entre une structure latérale et une paroi en tunnel d'un véhicule créant ainsi une surface complète sans saillie dans la zone des pieds d'un conducteur.

22. Structure de support selon la revendication 21, **caractérisée en ce que** la structure de support est supportée de manière ajustable par le châssis de sorte que les positions des pédales peuvent être ajustées à la taille du conducteur.

23. Véhicule comportant une unité de propulsion, au moins une unité de pédale de commande de l'unité de propulsion, un système de frein qui est adapté pour décélérer ledit véhicule et maintenir ledit véhicule dans une position d'arrêt et un système de commande de frein pour commander la force de freinage appliquée audit véhicule, dans lequel ledit système de commande de frein est relié à une pédale de frein, **caractérisé en ce qu'**au moins une desdites pédales est formée sous la forme d'unité de pédale de commande selon l'une quelconque des revendications 1 à 15.

24. Véhicule selon la revendication 23, **caractérisé en ce que** ladite pédale d'accélérateur et ladite pédale de frein sont agencées dans une structure de support selon l'une quelconque des revendications 16 à 22.
